# EUROPEAN PATENT APPLICATION

(11) **EP 1 584 968 A1**
(43) Date of publication of application: **12.10.2005**
(21) Application number: 05102473.5
(22) Date of filing: 29.03.2005
(51) Int. Cl.: G02C 5/22

(54) **Hinge for eyeglasses**

(30) Priority: 09.04.2004 IT PD20040033 U
(71) Applicant: Allison S.p.A., 35129 Padova PD (IT)
(72) Inventor: Vecellio Reane, Silvio, 35100, Padova (IT)
(74) Representative: Modiano, Guido

(57) **Abstract**

A hinge for eyeglasses, comprising a pivot (11) for the mutual rotation of a temple (12) and of a front (13) to which the temple (12) is hinged; the pivot (11) is arranged between a male hinge part (14) that cantilevers out from the temple (12) or the front (13), and a corresponding female hinge fork (15), which protrudes respectively from the front (13) or the temple (12); the male hinge part (14) is inserted between two tabs (16, 17) that form the female hinge part (15). The pivot (11) is constituted by the male hinge part (14) and by two cylindrical protrusions (11a, 11b), which are rigidly coupled thereto and enter with a snap action complementarily shaped seats (18, 19, 118, 119) provided in the tabs (16, 17) of the female hinge part (15).

## Description

The present invention relates to a hinge for eyeglasses.

Currently known hinges for eyeglasses are generally constituted by a pivot for the mutual rotation of a temple and of a front to which said temple is hinged.

Said pivot, typically constituted by a screw, connects the male part of the hinge, which protrudes in a cantilevered fashion from the temple or the frame, and a corresponding female hinge part, which protrudes respectively from the frame or temple.

Said male hinge part is arranged between two tabs, which form the female hinge part.

The male hinge part and the tabs are provided with holes, and the hole of the male part or the holes of the tabs are threaded in order to fix the screw.

Although these known hinges are widespread, they have significant manufacturing and assembly costs.

The male and female hinge parts are generally made of metallic material, which is provided with holes and optionally threaded for connection to the screw, which acts as a pivot.

Said screw, in view of its dimensions and of the valuable metallic material of which it is generally made, has a substantial cost in terms of the overall manufacturing cost of the eyeglasses.

It is further necessary to consider the assembly costs of these known hinges.

Assembly is in fact performed either by a specialized worker, who inserts the male hinge part in the female part and then mutually couples them by means of the screw, or by an automatic machine designed to perform this operation in series.

The aim of the present invention is to provide a hinge for eyeglasses that is easy and quick to assemble.

Within this aim, an object of the present invention is to provide a hinge for eyeglasses whose performance is not inferior to known types of hinge.

Another object of the present invention is to provide a hinge that is capable of increasing the aesthetic content of the eyeglasses of which it is part.

Another object of the present invention is to provide a hinge for eyeglasses that can be assembled even by an operator who has received no particular prior teaching.

Another object of the present invention is to provide a hinge for eyeglasses that can be manufactured by molding plastic material.

Another object of the present invention is to provide a hinge for eyeglasses that can be manufactured with known systems and technologies.

This aim and these and other objects that will become better apparent hereinafter are achieved by a hinge for eyeglasses, of the type that comprises a pivot for the mutual rotation of a temple and of a front to which said temple is hinged, said pivot being arranged between a male hinge portion that cantilevers out from said temple or said front, and a corresponding female hinge fork, which protrudes respectively from said front or said temple, said male hinge part being inserted between two tabs that form said female hinge fork, said hinge being characterized in that said pivot is constituted by said male hinge part and by two cylindrical protrusions that are rigidly coupled thereto and enter with a snap action complementarily shaped seats provided in said tabs of said female hinge part.

Further characteristics and advantages of the present invention will become better apparent from the following detailed description of two preferred but not exclusive embodiments thereof, illustrated by way of nonlimiting example in the accompanying drawings, wherein:

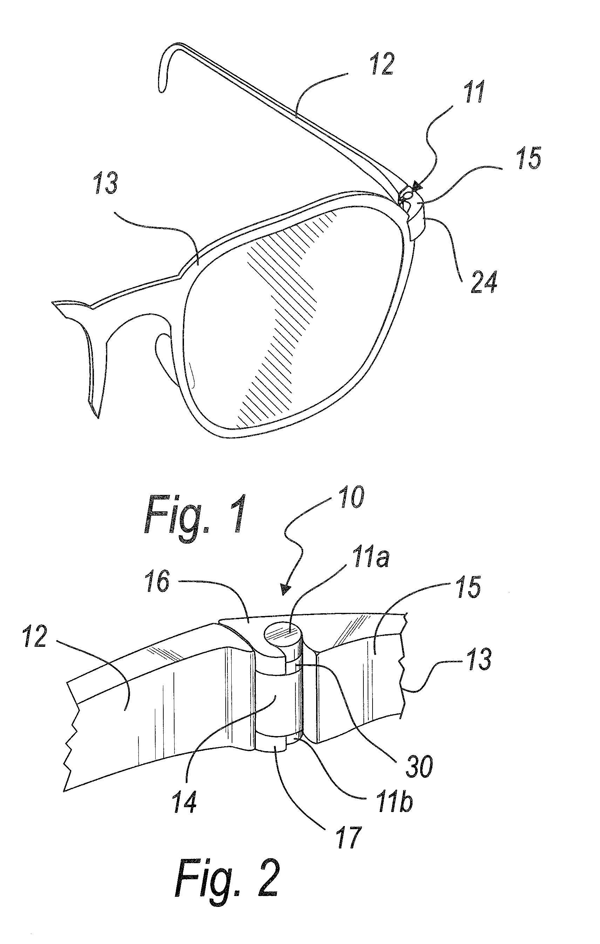

Figure 1 is a view of a portion of a pair of eyeglasses provided with a hinge according to the invention;
Figure 2 is a perspective view of a hinge for eyeglasses according to the invention in a first embodiment thereof;

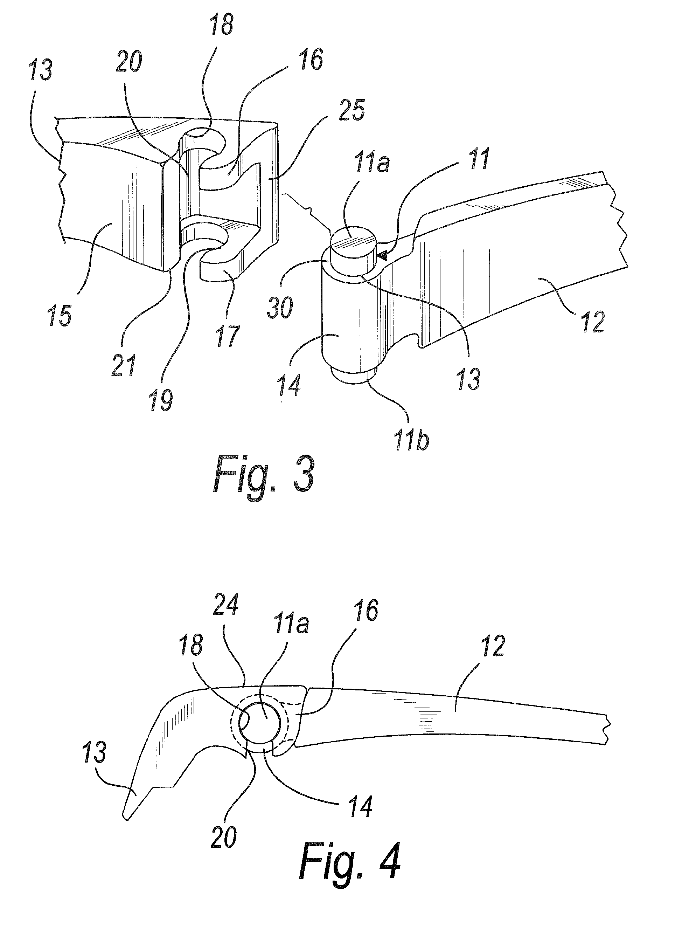

Figure 3 is an exploded perspective view of a hinge for eyeglasses according to the invention in the first embodiment of Figure 2;
Figure 4 is a top view of a hinge for eyeglasses according to the invention in the first embodiment shown in Figures 2 and 3;
Figure 5 is an exploded perspective view of a hinge for eyeglasses according to the invention in a second embodiment;
Figure 6 is a top view of a hinge for eyeglasses according to the invention in the second embodiment shown in Figure 5.

With reference to the figures, a hinge for eyeglasses according to the invention is generally designated by the reference numeral 10 in a first embodiment.

The hinge 10 comprises a pivot 11 for the mutual rotation of a temple 12 and of a front 13 to which the temple 12 is hinged.

The pivot 11 connects a male hinge part 14, which cantilevers out from the temple 12, and a corresponding female hinge fork 15, which protrudes from the front 13.

The male hinge part 14 is arranged between two tabs 16 and 17, which form the female hinge fork 15.

The pivot 11 is constituted by the male hinge part 14 and by two cylindrical protrusions 11a and 11b, which are rigidly coupled thereto.

The cylindrical protrusions 11a and 11b enter with a snap action complementarily shaped seats 18 and 19 provided on the tabs 16 and 17 of the female hinge part 15.

The cylindrical protrusions 11a and 11b extend from the male hinge part 14 in opposite directions.

The cylindrical protrusions 11a and 11b are coaxial with respect to each other and to the male hinge part 14, which is also substantially cylindrical.

The male hinge part 14 has a larger diameter than the cylindrical protrusions 11a and 11b and forms with each of said protrusions a shoulder 30 against which a tab 16 or 17 of the female hinge part 15 makes contact.

The male hinge part 14 protrudes from the temple 12 and forms a single body with it.

The female hinge part 15 protrudes laterally with respect to the front 13 and forms a single body with it.

The male hinge part 14 and the temple 12, as well as the female hinge part 15 and the frame 13, are obtained by molding plastic material.

In this first embodiment of the invention, each one of the complementarily shaped seats 18 and 19 passes through the tab 16 or 17 in which it is provided.

A lateral opening, 20 and 21 respectively, is provided for each seat 18 and 19 for the access of the corresponding cylindrical protrusion 11a or 11b to its seat 18 or 19.

The lateral opening 20 and 21 forms a choke with respect to the diameter of the adjacent seat 18 or 19.

In this embodiment, a hinge for eyeglasses 10 is assembled simply by pushing the cylindrical protrusions 11a and 11b into the respective lateral access openings 20 and 21.

The openings 20 and 21, which as mentioned are smaller than the diameter of the cylindrical protrusions 11a and 11b, yield elastically and allow said protrusions to be arranged within the seats 18 and 19.

The complementarily shaped seats 18 and 19 surround the corresponding cylindrical protrusions 11a and 11b, clamping them enough to eliminate the plays that prevent the temple 12 from remaining, with respect to the front 13, in the configuration set by a user.

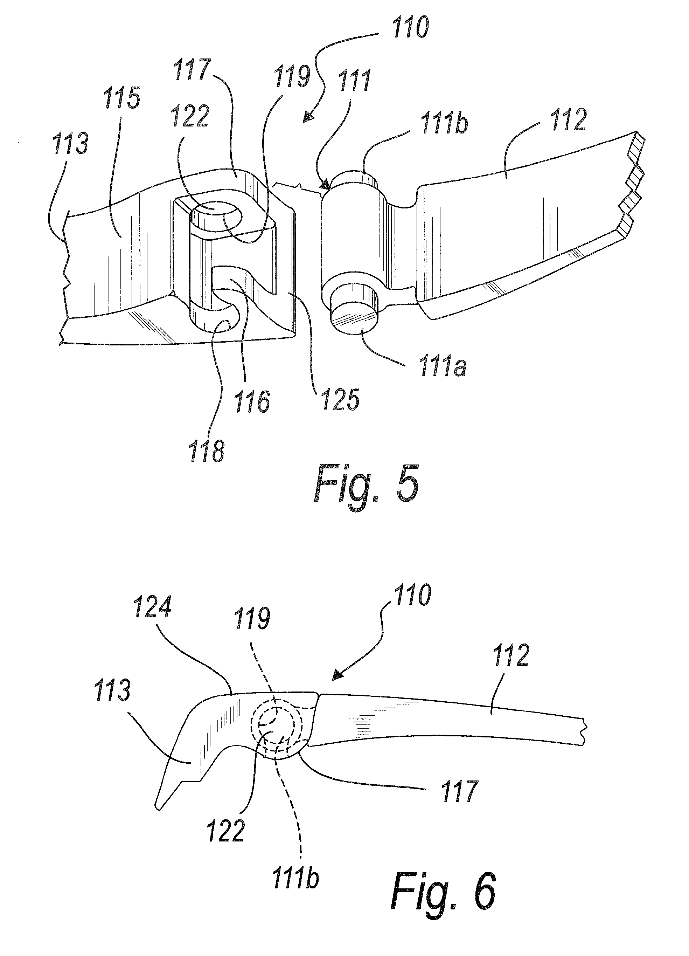

In a second embodiment of a hinge for eyeglasses according to the invention, shown in Figures 5 and 6 and designated therein by the reference numeral 110, the lower tab 116 has a first through seat 118 with a lateral access opening 120 for the respective lower cylindrical protrusion 111a.

The second seat 119 on the remaining upper tab 117 is substantially closed in a loop around the corresponding cylindrical protrusion 111b.

The upper tab 117 therefore is not provided with the lateral opening for accessing the seat 119.

Moreover, the second seat 119 is closed in an axial direction by a bottom 122.

The bottom 122 conceals the pivot 111 from view from above, giving an important aesthetic content to the eyeglasses.

In both embodiments 10 and 110, the female hinge fork 15 and 115 has, between the tabs that form it (16, 17 and 116, 117 respectively) a reinforcement wall 25 and 125 on the outer side 24 and 124 of the front 13 and 113 from which it protrudes.

The assembly of said second constructive variation of a hinge for eyeglasses 110 according to the invention entails first inserting the upper cylindrical protrusion 111b in the second closed seat 119 and then interlocking with a snap action the lower cylindrical protrusion 111a in the corresponding first lower seat 118, as already shown for the first embodiment 10.

In addition to the aesthetic contribution given by the bottom 122, the second seat 119 closed in a loop around the protrusion 111b reduces the probability of unwanted disengagement of the temple 112 from the frame 113.

In practice it has been found that the invention thus described solves the problems noted in known types of hinge for eyeglasses.

In particular, the present invention provides a hinge for eyeglasses that is easy and quick to assemble.

Moreover, the present invention provides a hinge for eyeglasses whose performance is not inferior to known types of hinge.

Moreover, the present invention provides a hinge that is capable of increasing the aesthetic content of the eyeglasses of which it is part.

Moreover, the present invention provides a hinge for eyeglasses that can be assembled even by an operator who has received no particular prior teaching.

Further, the present invention provides a hinge for eyeglasses that can be manufactured by molding plastic material.

Moreover, the present invention provides a hinge for eyeglasses that can be manufactured with known systems and technologies.

In practice, the materials employed, so long as they are compatible with the specific use, as well as the dimensions, may be any according to requirements and to the state of the art.

The disclosures in Italian Patent Application No. PD2004U000033 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A hinge for eyeglasses, of the type that comprises a pivot (11) for the mutual rotation of a temple (12) and of a front (13) to which said temple (12) is hinged, said pivot (11) being arranged between a male hinge part (14) that cantilevers out from said temple (12) or said front (13), and a corresponding female hinge fork (15), which protrudes respectively from said front (13) or said temple (12), said male hinge part (14) being inserted between two tabs (16, 17) that form said fork (15), said hinge (10) being **characterized in that** said pivot (11) is constituted by said male hinge part (14) and by two cylindrical protrusions (11a, 11b) that are rigidly coupled thereto and enter with a snap action complementarily shaped seats (18, 19) provided in said tabs (16, 17) of said female hinge fork (15).

2. The hinge for eyeglasses according to claim 1, **characterized in that** said cylindrical protrusions (11a, 11b) protrude from said male hinge part (14) in opposite directions, are coaxial with respect to each other and to said male hinge part (14), which is also substantially cylindrical and has a larger diameter than said cylindrical protrusions (11a, 11b).

3. The hinge for eyeglasses according to one or more of the preceding claims, **characterized in that** said male hinge part (14) protrudes from said temple (12) and forms a single body with it.

4. The hinge for eyeglasses according to one or more of the preceding claims, **characterized in that** said female hinge fork (15) protrudes laterally with respect to said front (13) and forms a single body with it.

5. The hinge for eyeglasses according to one or more of the preceding claims, **characterized in that** at least one of said complementarily shaped seats (18, 19) passes through the tab (16, 17) on which it is formed and has a lateral opening (20, 21) for the access of the corresponding cylindrical protrusion (11a, 11b) to said seat (18, 19), said lateral opening (20, 21) forming a choke with respect to the diameter of the adjacent seat (18, 19).

6. The hinge for eyeglasses according to one or more of the preceding claims, **characterized in that** both of said complementarily shaped seats (18, 19) have a lateral opening (20, 21).

7. The hinge for eyeglasses according to one or more of the preceding claims 1 to 5, **characterized in that** one of said tabs (116, 117) has a first through seat (118) with a lateral opening (120) for the access of the respective cylindrical protrusion (111a), the second seat (119) on the remaining tab (117) being substantially closed in a loop around the corresponding cylindrical protrusion (111b).

8. The hinge for eyeglasses according to claim 7, **characterized in that** said second seat (119) is closed axially by a bottom (122).

9. The hinge for eyeglasses according to one or more of the preceding claims, **characterized in that** said complementarily shaped seats (18, 19, 118) surround the corresponding cylindrical protrusions (11a, 11b, 111a) and clamp them.
